Europäisches Patentamt

European Patent Office

Office européen des brevets

(19)

(11) Veröffentlichungsnummer : **0 094 096**
**B1**

(12) **EUROPÄISCHE PATENTSCHRIFT**

(45) Veröffentlichungstag der Patentschrift :
01.10.86

(21) Anmeldenummer : 83104676.8

(22) Anmeldetag : 11.05.83

(51) Int. Cl.⁴ : **H 04 B   9/00**, H 04 M 11/06,
H 04 Q 11/04

(54) Breitbandkommunikationssystem.

(30) Priorität : 14.05.82 DE 3218261

(43) Veröffentlichungstag der Anmeldung :
16.11.83 Patentblatt 83/46

(45) Bekanntmachung des Hinweises auf die Patenterteilung : 01.10.86 Patentblatt 86/40

(84) Benannte Vertragsstaaten :
AT CH DE FR GB IT LI NL SE

(56) Entgegenhaltungen :
EP-A- 0 012 979
EP-A- 0 053 238
EP-A- 0 071 232
WISSENSCHAFTLICHE BERICHTE AEG-TELEFUN-
KEN, Band 53, Nr. 1-2, 1980, Seiten 72-79, Berlin, DE.
H. SCHÜSSLER: "Dienstintegrierter Teilnehmeranschluss mit Lichtwellenleitern"

(73) Patentinhaber : Siemens Aktiengesellschaft Berlin
und München
Wittelsbacherplatz 2
D-8000 München 2 (DE)

(72) Erfinder : Strehl, Herbert, Dipl.-Ing.
Drozzaweg 15
D-8000 München 70 (DE)

## Beschreibung

Die Erfindung bezieht sich auf ein Breitbandkommunikations-system mit jeweils zwischen einer Vermittlungsstelle und einer Teilnehmerstelle verlaufenden Lichtwellenleiter-Teilnehmeranschlußleitungen für Digitalkommunikationssignale, etwa 64-kbit/s-Digital-Fernsprechsignale, Bildschirmtextsignale, 8-kbit/s-Steuersignale, 34-Mbit/s-Bewegtbildkommunikationssignale.

In einem Lichtwellenleiter-Breitbandkommunikationssystem können die Teilnehmeranschlußleitungen jeweils einen einzigen, in beiden Übertragungsrichtungen ausgenutzten Lichtwellenleiter aufweisen oder aber jeweils zwei getrennte Lichtwellenleiter für die beiden Übertragungsrichtungen. Dabei sind im ersteren Falle über den Lichtwellenleiter, über den in Richtung von der Vermittlungsstelle zur Teilnehmerstelle hin TV-u./o. Ton-Breitbandsignale übertragen werden, in einem Rückkanal von der Teilnehmerstelle zur Vermittlungsstelle hin bei einem bisherigen Stand der Wellenlängenmultiplex-Technik nur Steuersignale oder relativ einfache Antworten bei interaktiven Diensten übertragbar ; sollen darüber hinausgehend (ggf. mehrere) 64-kbit/s-Digitalsignale und (ggf. mehrere) 8-kbit/s-Digitalsignale etwa für Digitalfernsprechen, Bildschirmtext, Faksimile und für die Signalisierung und Synchronisierung solcher Schmalband-Kommunikationsdienste zwischen Teilnehmerstelle und Vermittlungsstelle bzw. umgekehrt übertragen werden, so können zwei Lichtwellenleiter je Teilnehmeranschluß vorgesehen werden, nämlich für jede Übertragungsrichtung ein eigener Lichtwellenleiter (ntz 32 (1979) 3, S. 150 bis 153), wobei dann über die beiden Lichtwellenleiter ggf. auch Videokommunikationssignale für eine Bildfernsprechkommunikation geführt werden können.

Eine solche Signalübertragung über übertragungsrichtungseigene Lichtwellenleiter erfordert für die Übertragung in Richtung zur Teilnehmerstelle hin eine Bündelung von im Rahmen einseitig gerichteter Kommunikationsdienste wie Fernsehen und Hörfunk zu verteilenden TV- und ggf. Stereoton-Signalen mit im Rahmen bidirektionaler Kommunikationsdienste wie z. B. Fernsprechen, Fernschreiben, Datenkommunikation zu übermittelnden Telekommunikationssignalen und bringt damit ggf. eine Verknüpfung von Kommunikationsdiensten unterschiedlicher Betreiber mit sich, die aus telekommunikationspolitischen oder -rechtlichen Gründen oder auch aus technischen Gründen unerwünscht sein kann.

Eine solche Verknüpfung von Kommunikationsdiensten unterschiedlicher Betreiber ist auch bei einem (aus Wiss. Ber. AEG-TELE-FUNKEN 53 (1980) 1-2, S. 72 bis 79) bekannten diensteintegrierenden Netz mit Lichtwellenleitern als Teilnehmer-Anschlußleitungen gegeben, das die Übertragung von Kabelfernsehsignalen und von Fernsprech- und Datensignalen über zwei übertragungsrichtungsindividuelle Glasfasern oder mittels optischer Richtungskoppler, im Wellenmultiplex oder nach einem Burstverfahren über nur einen Lichtwellenleiter vorsieht.

Um eine Verknüpfung von Kommunikationsdiensten unterschiedlicher Betreiber, die, wie gesagt, aus telekommunikationspolitischen oder -rechtlichen Gründen oder auch aus technischen Gründen unerwünscht sein kann, zu vermeiden, kann, wie dies bereits an anderer Stelle (EP-A1-0071232, VT 9.2.83) angegeben wird, ein Breitbandkommunikationssystem mit jeweils zwischen Vermittlungsstelle und Teilnehmerstelle verlaufenden, jeweils zwei Lichtwellenleiter aufweisenden Teilnehmeranschlußleitungen für TV-u./o. Stereoton-Breitbandsignale und demgegenüber schmalbandige Digitalkommunikationssignale, in dem Breitbandsignale im Multiplex über den einen Lichtwellenleiter von der Vermittlungs- bzw. Verteilstelle zur Teilnehmerstelle übertragen werden und Digitalkommunikations-Schmalbandsignale, insbesondere 64-kbit/s-Digitalsignale, sowie Programmwahlsignale im Multiplex über den anderen Lichtwellenleiter von der Teilnehmerstelle zur Vermittlungs- bzw. Verteilstelle übertragen werden, auch derart ausgebildet sein, daß über den einen Lichtwellenleiter nur die TV- u./o. Stereoton-Breitbandsignale von der Vermittlungs- bzw. Verteilstelle zur Teilnehmerstelle übertragen werden und über den anderen Lichtwellenleiter alle Digitalkommunikations-Schmalbandsignale und ggf. auch Bidirektional-Bewegtbildkommunikations-Digitalsignale zwischen Vermittlungsstelle und Teilnehmerstelle und umgekehrt übertragen werden, wobei die Digitalkommunikationssignale der beiden Übertragungsrichtungen über den genannten anderen Lichtwellenleiter im Zeitgetrenntlageverfahren übertragen werden können ; in einem solchen Breitbandkommunikationssystem können dann die TV- und Stereoton-Programmverteilung einerseits und die bidirektionale Schmalband-Digitalkommunikation und ggf. auch Bildtelefon-Digitalkommunikation andererseits unabhängig voneinander, ggf. auch nacheinander, realisiert werden.

Ein Breitbandkommunikationssystem mit Lichtwellenleiter-Teilnehmeranschlußleitungen braucht indessen nicht stets auch eine Übertragung von im Rahmen einseitig gerichteter Kommunikationsdienste wie Fernsehen und Hörfunk zu verteilender TV- und/oder Stereoton-Signalen vorzusehen, sondern kann auch eine Übertragung von Telekommunikationssignalen allein im Rahmen bidirektionaler Kommunikationsdienste wie Fernsprechen, Fernschreiben, Datenkommunikation und Bewegtbildkommunikation vorsehen, und die Erfindung stellt sich nun die Aufgabe, ein hierfür besonders geeignetes Breitbandkommunikationssystem anzugeben.

Die Erfindung betrifft ein Breitbandkommunikationssystem mit jeweils zwischen Vermittlungsstelle und Teilnehmerstelle verlaufenden, jeweils einen einzigen Lichtwellenleiter aufweisenden Teilnehmeranschlußleitungen für Breitbandsignale und demgegenüber schmalbandige Digitalkommunikationssignale, insbesondere 64-kbit/s-Digitalsignale ; ein solches Breitbandkommunikationssystem ist erfindungsgemäß dadurch gekennzeichnet, daß über den die Teilnehmeranschlußleitung bildenden einzigen Lichtwellenleiter allein Digitalkommunikations-Schmalbandsignale und Bidirektional-Bildkommunikations-Digitalsignale der beiden Übertragungsrichtungen zwischen Vermittlungsstelle und Teilnehmerstelle und umgekehrt im Zeitgetrenntlageverfahren übertragen werden.

Die Erfindung bringt in Verbindung damit, daß die zu ihrer Verwirklichung benötigte Technologie bereits heute den praktischen Erfordernissen genügt, den Vorteil mit sich, daß in der optischen Ebene eine Entkopplung der Signale der beiden Übertragungsrichtungen beispielsweise durch Farbfilter oder hochwertige Richtungskoppler nicht notwendig ist, vielmehr ein einfacher (etwa 3-dB-) Koppler zwischen dem genannten Lichtwellenleiter einerseits und einem vom jeweiligen elektro-optischen Wandler kommenden Lichtwellenleiter bzw. einem zum jeweiligen opto-elektrischen Wandler führenden Lichtwellenleiter andererseits genügt.

Dabei können vorteilhafterweise in weiterer Ausgestaltung der Erfindung die Digitalkommunikationssignale jeweils einer Übertragungsrichtung im Zeitmultiplex gebündelt über den Lichtwellenleiter übertragen werden.

Anhand der Zeichnung wird die Erfindung noch näher erläutert.

Dabei zeigt

Figur 1 ein Ausführungsbeispiel eines Breitbandkommunikationssystems gemäß der Erfindung ;

Figur 2 verdeutlicht für ein solches Breitbandkommunikationssystem den Zeitablauf einer Signalübertragung im Zeitgetrenntlageverfahren.

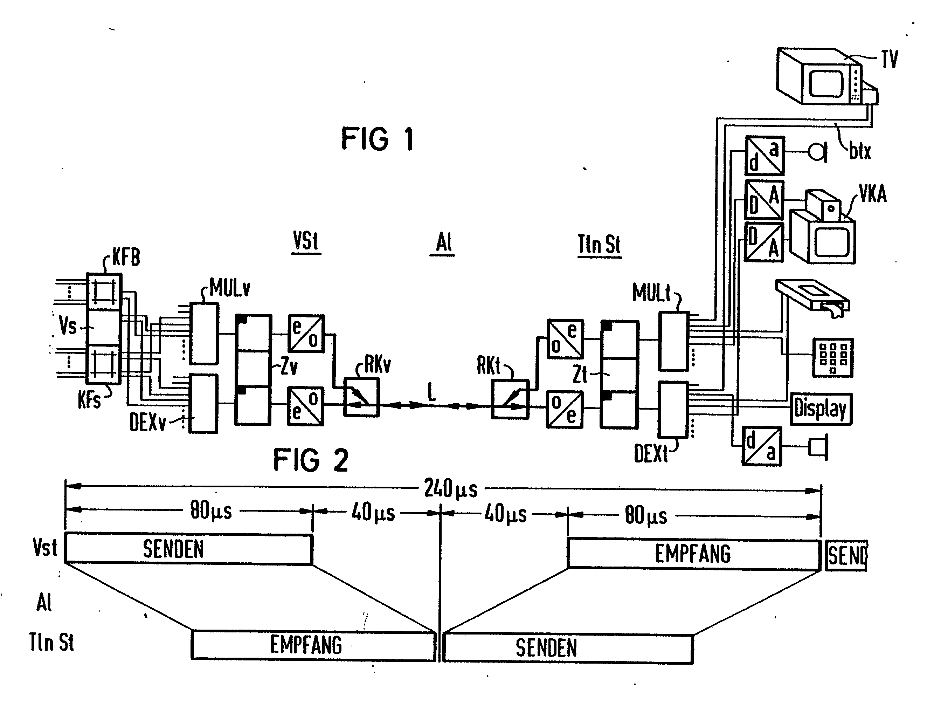

Die Zeichnung Fig. 1 zeigt schematisch in einem zum Verständnis der Erfindung erforderlichen Umfange ein Ausführungsbeispiel eines Breitbandkommunikationssystems gemäß der Erfindung. In diesem Breitbandkommunikationssystem ist eine Teilnehmerstelle TlnSt über eine einen — z. B. durch eine Gradientenfaser mit 50 μ Kerndurchmesser und 150 μ Manteldurchmesser gebildeten — Lichtwellenleiter L aufweisende Teilnehmeranschlußleitung Al mit der zugehörigen Vermittlungsstelle VSt verbunden, wobei in Fig. 1 angedeutet ist, daß die Teilnehmerstelle TlnSt für Digitalfernsprechen, Faksimiledienst, Bildschirmtext, Tastwahl und Displayanzeige sowie .—. mit einer Videokommunikationsanlage VKA mit Kamera und Bildschirmgerät — für bidirektionale Bewegtbildkommunikation (Bildfernsprechen) eingerichtet sein kann.

Über den Lichtwellenleiter L werden alle Digitalkommunikations-Schmalbandsignale sowie Bidirektional-Bildkommunikations-Digitalsignale von der Vermittlungsstelle VSt zur Teilnehmerstelle TlnSt und im umgekehrter Richtung von der Teilnehmerstelle TlnSt zur Vermittlungsstelle VSt übertragen. Dabei werden in der Vermittlungsstelle VSt über ein Schmalbandkoppelfeld KFs — beispielsweise der aus AT-PS 354 527 bekannten Art — durchvermittelte (z. B. 64-kbit/s-)Digital-Fernsprechsignale, Faksimilesignale und (z. B. 8-kbit/s-)Steuersignale sowie Bildschirmtext-(Btx-) Signale zusammen mit über ein ebenfalls von der Vermittlungssteuerung Vs gesteuertes Bildkommunikations-Koppelfeld KFB durchvermittelten Bildkommunikationssignalen in einem in der Vermittlungsstelle VSt teilnehmerindividuell vorgesehenen Multiplexer MULv zu einem dann zur Teilnehmerstelle TlnSt hin zu übertragenden Multiplexsignal, beispielsweise einem 8-Mbit/s- oder 34-Mbit/s-Zeitmultiplexsignal, zusammengefaßt ; ein in der umgekehrten Übertragungsrichtung von der Teilnehmerstelle TlnSt zur Vermittlungsstelle VSt gelangtes Multiplexsignal, insbesondere Zeitmultiplexsignal, wird in dem entsprechenden Demultiplexer DEXv in die entsprechenden Einzelsignale, beispielsweise über das Schmalband-Koppelfeld KFs durchvermitteltes (z. B. 64-kbit/s-)Digital-Fernsprechsignal und Faksimilesignal, (z. B. 8-kbit/s-)Steuersignal sowie Bildschirmtextsignal und über das Bildkommunikations-Koppelfeld KFB durchvermitteltes Digital-Bildkommunikationssignal, aufgefächert.

Eine entsprechende Signalbündelung bzw. -entbündelung findet — jeweils in umgekehrter Übertragungsrichtung — in der Teilnehmerstelle TlnSt statt, wozu dort ein entsprechender Multiplexer MULt bzw. Demultiplexer DEXt vorgesehen ist.

Dabei können Multiplexer MUL und Demultiplexer DEX beispielsweise mit Multiplexgeräten ZD 1000 C1 und ZD1000 E10 für ein 64-kbit/s-Multiplexsignal und einem Multiplexgerät DSE64K/2 für die Zusammenfassung von 64-kbit/s-Signalen zu einem 2,048-Mbit/s-Multiplexsignal sowie einem Multiplexgerät DSMX2/8 (bei einem 8-Mbit/s-Digitalsignal) und zusätzlich DSMX8/34 (bei einem 34-Mbit/s-Digitalsignal) realisiert sein.

Wie dies auch in Fig. 1 angedeutet ist, ist das Fernsprech-Endgerät in Senderichtung über einen Analog/Digital-Umsetzer d\a mit einem entsprechenden Eingang des Multiplexers MULt und in Empfangsrichtung über einen Digital/Analog-Umsetzer d/a mit einem entsprechenden Ausgang des Demultiplexers DEXt verbunden ; die Videokommunikationsanlage VKA ist in Senderichtung über einen Analog/Digital-Umsetzer D\A mit einem entsprechenden Eingang des Multiplexers MULt und in Empfangsrichtung über einen Digital/Analog-Umsetzer D/A mit einem entsprechenden Ausgang des Demultiplexers DEXt verbunden.

In der Vermittlungsstelle VSt ist mit dem Ausgang des dort vorgesehenen teilnehmerindividuellen Multiplexers MULv der elektrische Anschluß eines elektro-optischen Wandlers e/o verbunden ; der Eingang des in der Vermittlungsstelle VSt vorgesehenen Demultiplexers DEXv ist mit dem Ausgang eines opto-elektrischen Wandlers e\o verbunden. Die optischen Anschlüsse dieser beiden Wandler sind über einen Glasfaser-Richtungskoppler RKv mit dem Lichtwellenleiter L verbunden.

In entsprechender Weise ist in der Teilnehmerstelle TlnSt der Lichtwellenleiter L über einen Glasfaser-Richtungskoppler RKt mit dem optischen Ausgang eines elektro-optischen Wandlers o\e und dem optischen Eingang eines opto-elektrischen Wandlers o/e verbunden, wobei der elektrische Eingang des elektro-optischen Wandlers o\e mit dem Ausgang des genannten Multiplexers MULt und der elektrische Ausgang des opto-elektrischen Wandlers o/e mit dem Eingang des genannten Demultiplexers DEXt verbunden ist. Mit den Eingängen des Multiplexers MULt bzw. den Ausgängen des Demultiplexers DEXt sind dann die einzelnen Schmalbandkommunikations-Endgeräte bzw. -teilgeräte sowie die Videokommunikationsanlage VKA verbunden, ohne daß dies hier noch weiter erläutert werden müßte.

An die Glasfaser-Richtungskoppler RK, die hier ebenfalls nicht weiter erläutert zu werden brauchen, da Glasfaser-Richtungskoppler an sich (z. B. aus nachrichten elektronik (1979) 1, S. 18) bekannt sind, werden keine besonderen Anforderungen hinsichtlich der Entkopplung der Multiplexsignale der beiden Übertragungsrichtungen voneinander gestellt, wenn, wie dies auch in Fig. 1 angedeutet ist, die Multiplexsignale der beiden Übertragungsrichtungen im Zeitgetrenntlageverfahren über den Lichtwellenleiter L übertragen werden. In dem in Fig. 1 dargestellten Breitbandkommunikationssystem ist dazu in der Vermittlungsstelle VSt zwischen Multiplexer bzw. Demultiplexer MULv, DEXv und elektro-optischem bzw. opto-elektrischem Wandler e/o, e\o eine beispielsweise mit einem Schieberegister zu realisierende Pufferschaltung Zv vorgesehen ; in entsprechender Weise ist in der Teilnehmerstelle TlnSt zwischen Multiplexer MULt und Demultiplexer DEXt einerseits und elektro-optischem Wandler o\e und opto-elektrischem Wandler o/e andererseits eine entsprechende Zeitgetrenntlage-Pufferschaltung Zt vorgesehen.

Die somit bewirkte Verlagerung der eigentlichen Richtungstrennung von der optischem Ebene in die elektrische (und digitale) Ebene hat den Vorteil, daß die Zeitgetrenntlage-Steuerschaltungen Zv, Zt in herkömmlicher IC-Technologie (beispielsweise mit Schieberegistern) realisierbar sind. Die mit dem Einsatz des Zeitgetrenntlageverfahrens verbundene Tatsache, daß die Bitfolgefrequenz in den Signalbursts auf der Leitung ein Mehrfaches der Nutzbitrate beträgt, kann beim Einsatz auf dem Lichtwellenleiter L vorteilhafterweise außer Betracht bleiben, weil hier zum einen keine hochfrequente Störstrahlung auftritt und zum anderen die Leitungsdämpfung des Lichtwellenleiters nicht mit zunehmender Bitrate ansteigt, die Reichweite davon also davon nicht wie bei einer Cu-Leitung beeinflußt wird. Bei der Festlegung der Parameter für die Zeitgetrenntlageübertragung, beispielsweise von Burstlänge und Burstpause, ist es deshalb zweckmäßig, die bei der Signalübertragung über einen Lichtwellenleiter maximal mögliche Reichweite zugrunde zu legen.

Ein Beispiel des zeitlichen Ablaufs einer entsprechenden Burst-Übertragung wird durch Fig. 2 verdeutlicht : Nach diesem Beispiel steht für einen 80 μs langen Digitalsignalblock (Burst) eine maximale Signallaufzeit von 40 μs je Übertragungsrichtung zur Verfügung, was einer Lichtwellenleiter-Länge (Reichweite) von etwa 8 km entspricht ; innerhalb jedes Bursts können dabei jeweils beispielsweise 8 kbit mit einer Übertragungsgeschwindigkeit von z. B. 100 Mbit/s übertragen werden.

Abschließend sei noch bemerkt, daß das in Fig. 1 angedeutete Bildkoppelfeld KFB in einer ECL-Technik realisierte Koppelpunktschaltkreise aufweisen kann, die durch untereinander zu mehrstufigen Koppelpunktpyramiden verbundene steuerbare Multiplexer gebildet sind, wie dies auch bereits an anderer Stelle (EP-A-0086434, VT 24.8.83) angegeben wird.

## Patentansprüche

1. Breitbandkommunikationssystem mit jeweils zwischen Vermittlungsstelle (VSt) und Teilnehmerstelle (TlnSt) verlaufenden, jeweils einen einzigen Lichtwellenleiter (L) aufweisenden Teilnehmeranschlußleitungen für Breitbandsignale und demgegenüber schmalbandige Digitalkommunikationssignale, insbesondere 64-kbit/s-Digitalsignale, dadurch gekennzeichnet, daß über den die Teilnehmeranschlußleitung bildenden einzigen Lichtwellenleiter (L) allein Digitalkommunikations-Schmalbandsignale und Bidirektional-Bildkommunikations-Digitalsignale der beiden Übertragungsrichtungen zwischen Vermittlungsstelle (VSt) und Teilnehmerstelle (TlnSt) und umgekehrt im Zeitgetrenntlageverfahren übertragen werden.

2. Breitbandkommunikationssystem nach Anspruch 1, dadurch gekennzeichnet, daß die Digitalkommunikationssignale jeweils einer Übertragungsrichtung im Zeitmultiplex über den Lichtwellenleiter (L) übertragen werden.

## Claims

1. A broad-band communications system with subscriber connection lines which each extend between an exchange (VSt) and a subscriber station (TlnSt) and which each comprise one single light waveguide (L) for wide-band signals and comparatively narrow-band digital communications signals, in particular 64-kbit/s-digital signals, characterised in that the single light waveguide (L) which forms the subscriber connection line transmits, in time separation transmission mode, only digital communications narrow band signals and bidirectional picture communications digital signals of both directions of transmission between the exchange (VSt) and the subscriber station (TlnSt) and vice versa.

2. A broad-band communications system as claimed in claim 1, characterised in that the digital communications signals of one direction of transmission are transmitted by t. d. m. *via* the light waveguide (L).

**Revendications**

1. Système de communication à large bande comportant des lignes d'abonnés s'étendant respectivement entre un central (Vsa) et des postes d'abonnés (TlnSt) et comportant chacune un seul guide de lumière (L), pour des signaux à large bande et pour des signaux de communication numérique, qui sont à bande étroite par rapport aux signaux précédents, notamment des signaux numériques à 64 kbits/s, caractérisé par le fait que seuls tous les signaux de communication numérique à bande étroite et tous les signaux numériques de communication bidirectionnelle d'images, qui circulent dans les deux sens de transmission, sont transmis, par l'intermédiaire du guide de lumière unique (L) constituant la ligne d'abonné, entre le central (VSt) et un poste d'abonné (TlnSt) et inversement, selon le procédé de transmission par créneaux temporels séparés.

2. Système de communication à large bande suivant la revendication 1, caractérisé par le fait que les signaux de communication numérique à sens respectifs de transmission sont transmis selon un multiplexage temporel par l'intermédiaire du guide de lumière (L).

FIG 1

FIG 2